# EUROPEAN PATENT SPECIFICATION

(11) **EP 1 924 482 B1**
(45) Date of publication and mention of the grant of the patent: **04.11.2009**
(21) Application number: 05789456.0
(22) Date of filing: 09.08.2005
(51) Int. Cl.: B62D 5/00

(54) **STEER-BY-WIRE STEERING SYSTEM AND METHOD OF CONTROLLING THE SAME**
STEER-BY-WIRE-LENKSYSTEM UND STEUERVERFAHREN DAFÜR
SYSTEME DE DIRECTION A COMMANDE ELECTRIQUE ET SON PROCEDE DE COMMANDE

(43) Date of publication of application: 28.05.2008
(73) Proprietor: RENAULT TRUCKS, 69800 St Priest (FR)
(72) Inventor: DECHAMP, François, F-71250 CLUNY (FR)
(74) Representative: Putet, Gilles
(86) International application number: PCT/IB2005/003110
(87) International publication number: WO 2007/017711

(56) References cited:
- EP-A- 0 522 924
- EP-A- 0 854 075
- EP-A- 1 211 159
- EP-A- 1 332 946
- US-A1- 2003 209 381

## Description

### Technical field

The present invention relates to a steer-by-wire steering system and to a method of controlling this steering system.

### Technical background

Conventionally in a land-based vehicle, the steering system, that is to say the combination of means allowing the course of the vehicle to be directed, is implemented by a mechanism that connects a control member, generally a steering wheel, to at least one steering axle generally comprising two wheels, and which allows the orientation of the wheels relative to the vehicle to be modified. The mechanism may be assisted by electrical or hydraulic means in order to make it easier to transmit the rotation force from the control member to each wheel of the wheel set.

There also exists another type of steering known as "steer-by-wire" in which the control member is mechanically decoupled from the wheel set. See, for example, EP-A-0 854 075.

Schematically, a steer-by-wire steering system comprises a control member (steering wheel, lever, or joystick) on which a driver can act. By acting on the control member, the driver fixes a set point direction to be given to the vehicle. The movement that the driver applies to the control member is identified by a position sensor (an angle sensor in the case in which the control member is a steering wheel). The signal coming from the position sensor of the control member is suitably processed and then sent to one or more actuators that act on the orientation of the wheels relative to the vehicle, depending on the action that the driver has performed on the control member.

This type of steering has many advantages over conventional steering systems. In particular, this type of steering reduces the risk of injury by contact with the steering column in the event of an accident, and it can be easily parameterized. It is also particularly advantageous in the case of industrial vehicles, of the lorry or truck type, which have considerable architectural constraints and generally have a cab decoupled from the chassis. A steer-by-wire steering system especially avoids having to use a conventional steering column that has to be rigidly fixed both to the cab and to the chassis.

Importantly, in steer-by-wire steering system, a resistive torque is applied to the control member so that the driver has a sensation that recreates the force exerted by the two wheels of the steering axle on a running surface. The resistive torque is the tendency to oppose the movement and specifically the rotation, of the control member; it is expressed in Newton meter (N.m) as the product of a force and its distance from the axis of rotation

Specifically, the resistive torque may be generated by an electric motor, possibly combined with a reduction gear, which opposes a resistive torque substantially proportional to the position of the control member relative to the neutral position thereof (i.e. the higher the angle of the control member relative to its neutral position, the higher the resistive torque exerted on the control member) and substantially proportional to the speed with which the control member passes from its neutral position to its reference position (i.e. the higher the speed with which the control member passes from its neutral position to its reference position, the higher the resistive torque that is exerted on the control member).

To fulfil this function, which is essential for the correct operation of a steer-by-wire steering system, it is possible to use an electric stepper motor or a DC motor, which has the drawback of being relatively bulky. This motor has to be installed close to the control member, which is necessarily in the passenger compartment or the cab of the vehicle. However, it is desirable to provide the maximum amount of space in the passenger compartment so as to offer the maximum amount of comfort to the one or more passengers sitting therein. The problem of passenger compartment space is particularly acute in the case of industrial vehicles of the lorry type. This is because the cab of such vehicles serves as living environment, especially for the driver, and it is necessary to maximize the available space for the driver.

Another problem associated with the use of an electric motor stems from the fact that, when an action is applied to the steering system, the motor may come into action after a response time that may be up to 10 ms. This response time may prove to be prejudicial to the driving of the vehicle.

It therefore has to be said that means for creating a resistive torque on a control member are not completely satisfactory from several standpoints.

### Summary of the invention

One object of the invention is to propose a steering system of the steer-by-wire type, the torque generating means of which are compact.

Another object of the invention is to propose a steering system of the steer-by-wire type, the torque generating means of which have a short response time.

Another object of the invention is to propose a steer-by-wire steering system with a high level of reliability.

The subject of the invention is essentially a steer-by-wire steering system for a motor vehicle according to the preamble of claim 1.

Specifically to the invention, the steer-by-wire steering system further comprises a torque generator capable of generating a torque that is added to or subtracted from the resistive torque generated by the elastic element to obtain a reference torque defined for a given vehicle speed and a given control member angle.

The basis of the invention is to provide combined resistive means that are divided into an elastic element and a torque generator. This arrangement proves to be extremely advantageous from many standpoints. In particular, the steering system according to the invention provides the resistive function of the steering system with redundancy. One important point to mention is that this redundancy is obtained by the addition of an elastic element which, when this is a spring, entails a relatively modest economic cost. The steering system according to the invention allows operation in the gradient mode with a resistive function on the control member that is preserved, either by the action of the elastic element alone, or by the action of the torque generator alone. The fact of combining the action of an elastic element with that of a torque generator makes it possible to reduce the size of the torque generator relative to a conventional steering system in which the resistive torque is provided exclusively by a torque generator. The steering system according to the invention also has, as an additional advantage, an elastic element that reacts immediately.

According to one embodiment, the steering system can comprise a torque sensor that can measure the torque actually applied to the control member. The torque measured by this torque sensor may be compared with a reference torque within the context of feedback torque control.

According to one possibility, the elastic element may obey a linear elasticity law, which can represent the most common situation. However, it is possible in certain applications to provide an elastic element which exhibits non-linear elasticity.

According to one possible embodiment of the invention, the elastic element may be a spring, which has the advantage of having a modest cost.

It is envisaged for the torque generator to be an electric motor, which makes it possible to deliver a resistive torque that can be easily parameterized.

According to another aspect, the invention relates to a method of determining a resistive torque to be applied to a control member for a given position of said control member of a steer-by-wire steering system. The method comprises, in particular, the steps of: i defining a reference torque to be applied to the control member; ii determining a difference between the reference resistive torque and a torque delivered by an elastic element for the given position of the control member, and converting this difference into a signal; and iii delivering this signal to a resistive torque generator in order to deliver a torque that is added to or subtracted from the torque of the elastic element in order to produce the reference torque.

The invention essentially provides for the use of the torque generator to deliver a variable torque that can be added to or subtracted from the torque provided by the elastic element (which torque cannot by nature be parameterized), so as to meet the resistive torque demand of the steering system.

According to one possibility, the reference torque to be applied to the control member is predetermined as a function of the control member angle α and of the speed of the vehicle. In other words, to a given position of the control member and to a given speed of the vehicle corresponds a preset torque reference.

According to another possibility, which allows the driver to be provided with a sensation closer to that of a mechanical steering system, the reference torque to be applied to the control member is determined as a function of the force exerted by a wheel on a steering actuator. In this case, the method may provide the steps of: measuring the torque to be applied to the control member by a torque sensor; comparing the measured torque with the torque exerted on the steering actuators or a function of this torque and converting the difference into a signal; and transmitting this signal to the resistive torque generator in order to deliver a driving or resistive torque that is added to the resistive torque from the elastic element in order to produce the reference torque.

These and other advantages will become apparent upon reading the following description in view of the drawing attached hereto representing, as a non-limiting example, an embodiment of a steering system according to the invention.

### Brief description of the drawing

The following detailed description of embodiments of the invention is better understood when read in conjunction with the appended drawings, being understood, however, that the invention is not limited to the specific embodiments disclosed. In the drawings,
- Figure 1 is a block diagram of a steering system according to the invention;
- Figure 2 is a graphical representation of the response of the steering system in terms of the resistive torque as a function of a control angle applied to a control member; and
- Figures 3 and 4 are representations as a function of time of an action on a control member and the steering response in terms of the resistive torque, respectively;
- Figure 5 is a flowchart depicting a method of determining a torque to be applied to a control member;
- Figure 6 is a flowchart depicting a method of determining a reference torque to be applied on a steering control member.

### Description of the invention

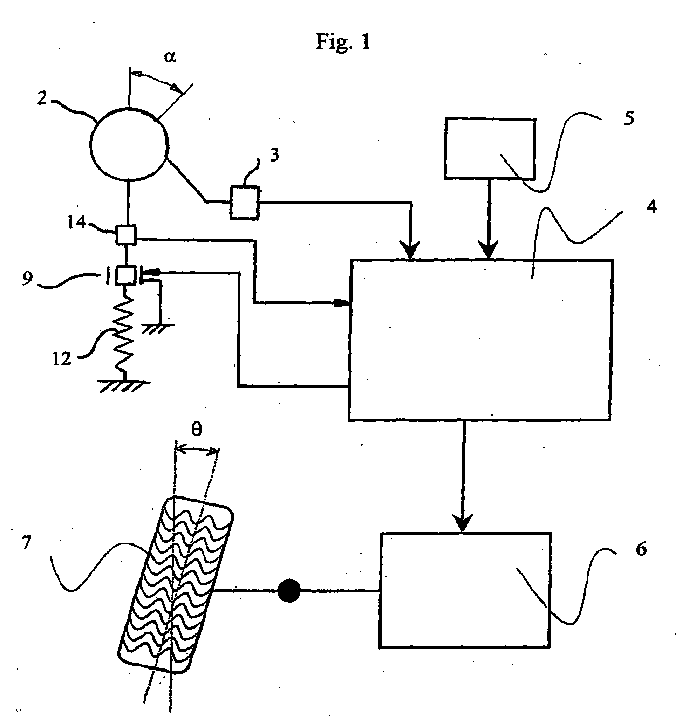

As illustrated in Figure 1, the steer-by-wire steering system comprises a control member 2, which, in the case illustrated, is a steering wheel. The control member 2 could be a joystick, a lever or a rocker. It is through this member that a driver sets the reference path to be given to the vehicle.

The control angle α that the driver applies to the control member 2 is measured by a sensor 3, the signal from which is sent to a CPU 4. The CPU 4 can suitably include a microprocessor, a data memory such as a RAM memory and a program memory such as a ROM memory.

The CPU 4 may also receive a signal representative of the vehicle speed from a speed sensor 5.

Using a preloaded computing routine, which takes into account the angle α of the control member and, possibly, the speed of the vehicle, the CPU 4 generates an output signal that is sent to an actuator 6 responsible for the steering angle θ of the normally two or more steer wheels 7 (only a single steer wheel is shown in Figure 1) relative to the longitudinal axis of the vehicle. It is also conceivable to provide the steering system with two or several actuators, which each act on one steer wheel each.

As has just been described, a stream of signals goes from the control member 2 to the steer wheels 7, and in return the control member 2 is subjected to a torque. To exert this torque, according to the invention, the control member 2 is connected to an elastic element 12 such as a spring and to a torque generator 9. The torque generator 9 may, for example, be a DC motor connected to a resistor, the value of which may be adjusted by the CPU 4. The torque generator 9 is shown schematically by a rotor 10, which is fastened to a shaft driven by the control member 2, and by a stator 11. The torque generator 9 is connected to the CPU 4.

It may also be seen that the torque which is applied to the control member is delivered by an elastic element 12, whose behaviour is therefore dictated by its elasticity coefficient, and a torque generator 9, whose behaviour can be parameterized. In Figure 1, the elastic element 12 is shown by a spring. In other embodiments of the invention, the elastic element 12 may, for example, be a steel spring or a spring made of a composite material. It may also comprise a block of elastic composite material linked to the rotation shaft of the control member 2.

It may also be pointed out that the steering system may be equipped with a torque sensor 14 which measures the torque applied to the control member 2. The signal transmitted by the sensor 14, representative of the torque applied to the control member, can be sent to the CPU 4. The function of the torque sensor 14 will appear later.

According to the invention, the control member 2 is subjected to a combined torque, delivered by the elastic element 12 and by the torque generator 9.

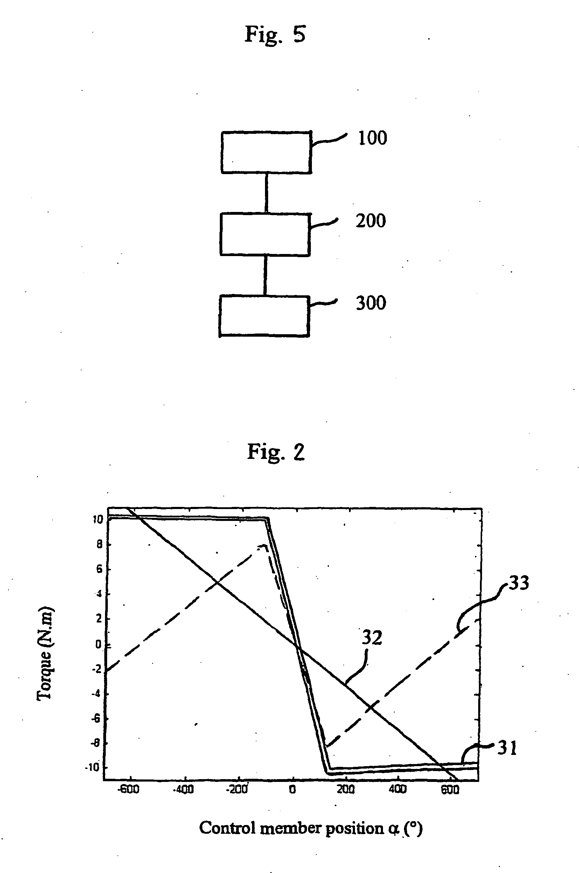

As this appears on figure 5, the invention provides for a method in which a reference torque has to be applied on the control member 2. In a first step 100, this reference torque can either have a predetermined value or be a function of the force exerted by a wheel 7 on the steering actuator.

From this reference step, the CPU 4 determines 200 a difference with the torque delivered by the elastic element 12.

The CPU 4 issues 300 an output signal towards the torque generator 9 which has the effect of adding to or subtracting from a torque to the torque produced by the elastic element 12.

In practice, essentially two types of torque that the torque generating means have to exert on the control member 2 may be distinguished.

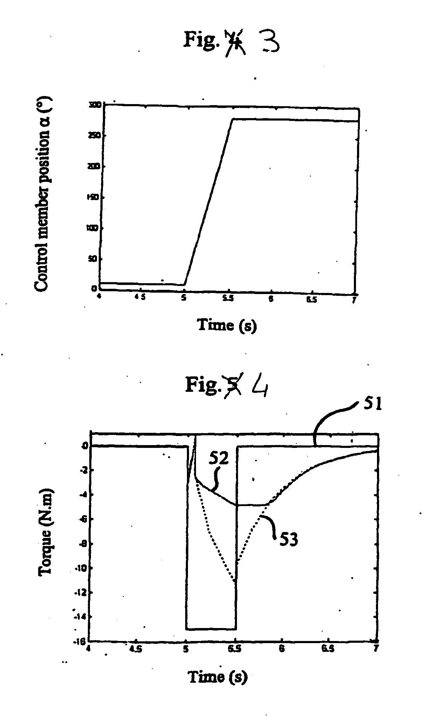

In one case, this is a static force that corresponds to the situation in which the driver applies a steady steering angle. This situation is illustrated in Figure 3.

Plotted on the y-axis in Figure 2 is the torque applied to the control member 2, which, in the example shown, varies between -10 and + 10 N.m against the angle α of the control member which, in the example shown varies between -600° and +600°.

In this case, it is necessary for the resistive torque generating means to exert an action on the control member 2 for the purpose of bringing it back to its mid-point, that is to say a position in which the steer wheels are oriented along the longitudinal direction of the vehicle. In this situation, which may be termed the static situation, it may be desirable, for an angle of the control member 2 of between approximately -600° and +600° about the mid-point, for the torque to have a substantially linear portion over a certain range about the mid-point, for example from -200° to +200° (for a small angle of the steering wheel, the resistive torque is low) about the mid-point, whereas, for angle values of less than -200° and greater than +200°, the torque may be constant and equal to the maximum value of the torque. The curve 31 showing the reference resistive torque is shown by the double lines.

The elastic element 12 has a resistive torque that varies in a completely known manner according to its coefficient of elasticity. The resistive torque of the elastic element 12 is shown by the continuous solid line 32. As this can be seen In Figure 3, when the control member 2 is at its mid point, the elastic element 12 is at its neutral position, i.e. for an angle of 0° of the control member 2, the elastic element 12 exert on action of 0 N.m over the control member 2.

As clearly shown in Figure 2, the torque generator 9 is used to deliver a torque that is added to or subtracted from the resistive torque delivered by the elastic element 12 in order to obtain the desired reference torque. It will be seen later how the reference value of the resistive torque is determined.

Furthermore, in the dynamic range, which corresponds to the situation in which a driver exerts an action on the steering wheel 2 in order to steer the wheels, Figure 3 shows this situation. Figure 3 shows an action on the control member 2 by a driver as a function of time; for example, Figure 3 illustrates the situation in which a control angle α of about 270° is demanded in 0.5 s. It is necessary for the action that the driver exerts on the steering wheel to be counteracted so that the driver communicates to the steering wheel a control signal that is compatible with the response time of the actuator or actuators which control the orientation of the driven wheels relative to the vehicle. Moreover, it may be a risk as regards the stability of the vehicle, especially at high speed, if the driver has the possibility of giving the control member 2 a high-amplitude impulse.

Figure 4 shows the response of the resistive means as a function of time; plotted on the y-axis of Figure 4 is the torque in N.m as a function of time. The reference torque is shown by the curve 51. The resistive torque exerted by the elastic element 12 is shown by the continuous single line 62, while the resistive torque exerted by the torque generator 9 is shown by the broken line 63. It may be seen that the combined action of the elastic element 12 and the torque generator 9 makes it possible to approximate the theoretical reference resistive torque.

The combined operation of the elastic element 12 and the torque generator 9 is similar in the unsteering case, that is to say in the case when the steering wheel is brought back to its mid-point from a steered position.

As regards the determination of the reference resistive torque, it may be envisaged to set the torque value relative to predetermined values that depend on the control angle α and on the speed of the vehicle. These reference torque values may, for example, be stored in a memory of the CPU 4. In this situation, in which the reference resistive torque and the torque of the elastic element 12 are known for a given angle and a given speed, it is possible to determine the resistive torque that the torque generator 9 must exert.

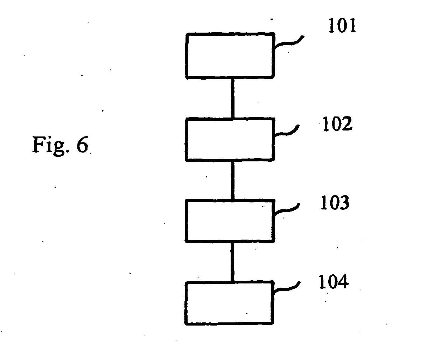

It may also be envisaged to define the reference torque to be applied to the control member 2 as a function of the force deployed by the turning actuator 7 for orienting the steer wheels. Figure 6 illustrates this possible method of defining the reference torque. In a first step 101, the torque sensor 14 is provided for this purpose; the sensor 14 measures the resistive torque exerted by the elastic element 12 and the torque generator 9.

In a second step 102, the torque on the control member is compared to the or to a function of the torque exerted by a wheel 7 on the steering actuator 6, the difference is used to generate a signal that is sent, in a third step 103, to the torque generator 9 so that the latter adds torque to the resistive torque delivered by the elastic element 12 or subtracts this therefrom, depending on the case. This method of determining the reference torque provides a steering feeling which is closer to the steering feeling of a conventional mechanical steering system.

Of course, the invention is not restricted to the embodiment that has just been described by way of non-limiting example, but on the contrary it encompasses all embodiments thereof. The numerical values are, of course, purely indicative and are given merely as examples in order to make the invention easier to understand. In no way do they restrict the invention.

## Claims

1. Steer-by-wire steering system for a motor vehicle, comprising:
- a control member (2) allowing a user to give a set direction to the vehicle, the position α of which is identified by at least one sensor (3);
- at least one steering actuator (6) that can orient at least one steer wheel (7) relative to the vehicle by an angle θ;
- a processing means (4) that can receive an input signal representing the position of the control member coming from the at least one sensor (3) and that can transmit an output signal representing the angle θ to each of the steering actuators (6);
- a means for generating a torque on the control member (2) having:
(i) an elastic element (12) that can generate, according to a known elasticity law, a resistive torque in reaction to an action exerted on the control member (2); and
(ii) a torque generator (9);
**characterized in that** the torque generator (9) is capable of generating a torque that is added to or subtracted from the resistive torque generated by the elastic element (12) to obtain a reference torque defined for a given vehicle speed and a given control member angle.

2. Steer-by-wire steering system according to claim 1, **characterized in that** it comprises a torque sensor (14) that can measure the torque actually applied to the control member (2).

3. Steer-by-wire steering system according to Claim 1 or Claim 2, **characterized in that** the elastic element (12) obeys a linear elasticity law.

4. Steer-by-wire steering system according to Claim 1 or Claim 2, **characterized in that** the elastic element (12) obeys a non-linear elasticity law.

5. Steer-by-wire steering system according to one of Claims 1 to 4, **characterized in that** the elastic element (12) is a spring.

6. Steer-by-wire steering system according to Claims 1 to 5, **characterized in that** the torque generator (9) is an electric motor.

7. Method of determining a torque to be applied to a control member (2) for a given control position of said control member of a steer-by-wire steering system, **characterized in that** it comprises the steps of:
- i. defining (100) a reference torque to be applied to the control member (2);
- ii. determining (200) a difference between the reference torque and a resistive torque delivered by an elastic element (12) for the given position of the control member, and converting this difference into a signal; and
- iii. delivering (300) this signal to a torque generator (9) in order to deliver a torque that is added to or subtracted from the resistive torque of the elastic element (12) in order to produce the reference torque.

8. Method according to Claim 7, **characterized in that** the reference torque to be applied to the control member (2) is predetermined as a function of the control angle and the speed of the vehicle.

9. Method according to Claim 7, **characterized in that** the reference torque to be applied to the control member (2) is a function of the force exerted by a wheel (7) on a steering actuator (6).

10. Method according to Claim 9, **characterized in that** it comprises the steps of:
- measuring (101) the torque applied to the control member (2);
- comparing (102) the measured torque with the torque or a function of the torque exerted by a wheel (6) on a steering actuator (7) and converting the difference into a signal; and
- transmitting (103) this signal to the torque generator (9) in order to deliver a torque that is added to or subtracted to the resistive torque from the elastic element (12) in order to produce the reference torque.

## Patentansprüche

1. Steer-by-Wire-Lenksystem für ein Motorfahrzeug, umfassend:
- ein Steuerelement (2), das es einem Benutzer erlaubt, dem Fahrzeug eine bestimmte Richtung zu geben, und dessen Position α durch mindestens einen Sensor (3) identifiziert wird;
- mindestens ein Lenkstellglied (6), das mindestens ein Lenkrad (7) relativ zu dem Fahrzeug um einen Winkel θ ausrichten kann;
- eine Verarbeitungseinrichtung (4), die ein Eingangssignal empfangen kann, das die von dem mindestens einem Sensor (3) kommende Position des Steuerelements repräsentiert, und die ein Ausgangssignal zu jedem der Lenkstellglieder (6) senden kann, das den Winkel θ repräsentiert;
- eine Einrichtung zum Erzeugen eines Drehmoments an dem Steuerelement (2) mit:
(i) einem elastischen Element (12), das gemäß einem bekannten Elastizitätsgesetz ein Widerstandsdrehmoment ansprechend auf eine auf das Steuerelement (2) ausgeübte Wirkung erzeugen kann; und
(ii) einem Drehmomenterzeuger (9);
**dadurch gekennzeichnet, dass** der Drehmomenterzeuger (9) ein Drehmoment erzeugen kann, das zu dem von dem elastischen Element (12) erzeugten Widerstandsdrehmoment hinzugefügt oder von diesem abgezogen wird, um ein Referenzdrehmoment zu erhalten, das für eine gegebene Fahrzeuggeschwindigkeit und einen gegebenen Steuerelementwinkel definiert ist.

2. Steer-by-Wire-Lenksystem nach Anspruch 1, **dadurch gekennzeichnet, dass** es einen Drehmomentsensor (14) umfasst, der das tatsächlich auf das Steuerelement (2) aufgebrachte Drehmoment messen kann.

3. Steer-by-Wire-Lenksystem nach Anspruch 1 oder 2, **dadurch gekennzeichnet, dass** das elastische Element (12) einem linearen Elastizitätsgesetz folgt.

4. Steer-by-Wire-Lenksystem nach Anspruch 1 oder 2, **dadurch gekennzeichnet, dass** das elastische Element (12) einem nichtlinearen Elastizitätsgesetz folgt.

5. Steer-by-Wire-Lenksystem nach einem der Ansprüche 1 bis 4, **dadurch gekennzeichnet, dass** das elastische Element (12) eine Feder ist.

6. Steer-by-Wire-Lenksystem nach den Ansprüchen 1 bis 5, **dadurch gekennzeichnet, dass** der Drehmomentgenerator (9) ein Elektromotor ist.

7. Verfahren zur Bestimmung eines auf ein Steuerelement (2) aufzubringenden Drehmoments für eine gegebene Steuerposition des Steuerelements eines Steer-by-Wire-Lenksystems, **dadurch gekennzeichnet, dass** es die Schritte umfasst:
- i. Definieren (100) eines auf das Steuerelement (2) aufzubringenden Referenzdrehmoments;
- ii. Bestimmen (200) einer Differenz zwischen dem Referenzdrehmoment und einem durch ein elastisches Element (12) abgegebenen Widerstandsdrehmoment für die gegebene Position des Steuerelements und Umwandeln dieser Differenz in ein Signal;
- iii. Abgeben (300) dieses Signals an einen Drehmomenterzeuger (9) zum Abgeben eines Drehmoments, das zu dem Widerstandsdrehmoment des elastischen Elements (12) hinzugefügt oder von diesem abgezogen wird, um das Referenzdrehmoment zu erzeugen.

8. Verfahren nach Anspruch 7, **dadurch gekennzeichnet, dass** das auf das Steuerelement (2) aufzubringende Referenzdrehmoment als Funktion des Steuerwinkels und der Geschwindigkeit des Fahrzeugs vorherbestimmt wird

9. Verfahren nach Anspruch 7, **dadurch gekennzeichnet, dass** das auf das Steuerelement (2) aufzubringende Referenzdrehmoment eine Funktion der von einem Rad (7) auf ein Lenkstellglied (6) aufgebrachten Kraft ist.

10. Verfahren nach Anspruch 9, **dadurch gekennzeichnet, dass** es die Schritte umfasst:
- Messen (101) des auf das Steuerelement (2) aufgebrachten Drehmoments;
- Vergleichen (102) des gemessenen Drehmoments mit dem Drehmoment oder einer Funktion des Drehmoments, das von einem Rad (6) auf ein Lenkstellglied (7) aufgebracht wird, und Umwandeln der Differenz in ein Signal; und
- Senden (103) dieses Signals an den Drehmomentgenerator (9) zum Abgeben eines Drehmoments, das zu dem Widerstandsdrehmoment von dem elastischen Element (12) hinzugefügt oder von diesem abgezogen wird, um das Referenzdrehmoment zu erzeugen.

## Revendications

1. Système de direction à commande électronique pour un véhicule à moteur, comprenant :
- un organe de commande (2) permettant à un utilisateur de donner une direction déterminée au véhicule, dont la position α est identifiée par un moins un capteur (3) ;
- au moins un actionneur de direction (6) qui peut orienter au moins une roue directrice (7) d'un angle θ par rapport au véhicule ;
- des moyens de calcul (4) qui peuvent recevoir un signal d'entrée représentant la position de l'organe de commande provenant du au moins un capteur de position (3) et qui peuvent transmettre un signal de sortie représentant l'angle θ à chacun des actionneurs de direction (6) ;
- des moyens pour créer un couple sur l'organe de commande (2) ayant :
(i) un élément élastique (12) qui peut créer, selon une loi d'élasticité connue, un couple résistif en réaction à une action exercée sur l'organe de commande (2) ; et
(ii) un générateur de couple (9) ;
**caractérisé en ce que** le générateur de couple (9) est capable de créer un couple qui est ajouté ou soustrait au couple résistif créé par l'élément élastique (12) pour obtenir un couple de référence défini pour une vitesse donnée du véhicule et pour un angle donné de l'organe de commande.

2. Système de direction à commande électronique selon la revendication 1, **caractérisé en ce qu'**il comporte un capteur de couple (14) qui peut mesurer le couple effectivement appliqué à l'organe de commande (2).

3. Système de direction à commande électronique selon l'une des revendications 1 ou 2, **caractérisé en ce que** l'élément élastique (12) obéit à une loi d'élasticité linéaire.

4. Système de direction à commande électronique selon l'une des revendications 1 ou 2, **caractérisé en ce que** l'élément élastique (12) obéit à une loi d'élasticité non-linéaire.

5. Système de direction à commande électronique selon l'une des revendications 1 à 4, **caractérisé en ce que** l'élément élastique (12) est un ressort.

6. Système de direction à commande électronique selon les revendications 1 à 5, **caractérisé en ce que** le générateur de couple (9) est un moteur électrique.

7. Méthode de détermination d'un couple à appliquer à un organe de commande (2) pour une position donnée dudit organe de commande d'un système de direction à commande électronique, **caractérisée en ce qu'**elle comporte les étapes de :
- i. définir (100) un couple de référence à appliquer à l'organe de commande (2) ;
- ii. déterminer (200) une différence entre le couple de référence et un couple résistif fourni par un élément élastique (12) pour la position donnée de l'organe de commande, et convertir cette différence en un signal ; et
- iii. fournir (300) ce signal à un générateur de couple (9) de manière à fournir un couple qui est ajouté ou soustrait au couple résistif de l'élément élastique (12) de manière à produire le couple de référence.

8. Méthode selon la revendication 7, **caractérisée en ce que** le couple de référence à appliquer à l'organe de contrôle est prédéterminé en tant que fonction de l'angle de commande et de la vitesse du véhicule.

9. Méthode selon la revendication 7, **caractérisée en ce que** le couple de référence à appliquer à l'organe de commande (2) est une fonction de la force exercée par une roue (7) sur un actionneur de direction (6).

10. Méthode selon la revendication 9, **caractérisée en ce qu'**elle comprend les étapes de :
- mesurer (101) le couple appliqué à l'organe de commande (2) ;
- comparer (102) le couple mesuré avec le couple ou une fonction du couple exercé par une roue (6) sur un actionneur de direction (7) et convertir la différence en un signal ; et
- transmettre (103) ce signal au générateur de couple (9) de manière à fournir un couple qui est ajouté ou soustrait au couple résistif d'un élément élastique de manière à produire le couple de référence.
